# EUROPÄISCHE PATENTSCHRIFT

(11) **EP 1 792 383 B1**
(45) Veröffentlichungstag und Bekanntmachung des Hinweises auf die Patenterteilung: **11.11.2009**
(21) Anmeldenummer: 05787287.1
(22) Anmeldetag: 07.09.2005
(51) Int. Cl.: H02K 15/00

(54) **VERFAHREN ZUM EINBRINGEN EINER ABDECKISOLIERUNG IN EINE NUT EINES ELEKTROMOTOR-LÄUFERS**
METHOD FOR INSERTING SHIELD INSULATION INTO A SLOT OF THE ROTOR OF AN ELECTRIC MOTOR
PROCEDE DE POSE D'UNE ISOLATION DE PROTECTION DANS UNE RAINURE D'UN ROTOR DE MOTEUR ELECTRIQUE

(30) Priorität: 25.09.2004 DE 102004046659
(43) Veröffentlichungstag der Anmeldung: 06.06.2007
(73) Patentinhaber: Vorwerk & Co. Interholding GmbH, 42275 Wuppertal (DE)
(72) Erfinder: SCHMITZ, Volker, 42655 Solingen (DE)
(74) Vertreter: Müller, Enno
(86) Internationale Anmeldenummer: PCT/EP2005/054402
(87) Internationale Veröffentlichungsnummer: WO 2006/032610

(56) Entgegenhaltungen:
- DE-A1- 4 029 981
- GB-A- 1 076 148
- US-A- 1 557 259
- US-A- 3 127 662
- PATENT ABSTRACTS OF JAPAN Bd. 006, Nr. 251 (E-147), 10. Dezember 1982 (1982-12-10) -& JP 57 148547 A (TOKYO SHIBAURA DENKI KK), 13. September 1982 (1982-09-13)

## Beschreibung

Die Erfindung betrifft ein Verfahren zum Einbringen einer Abdeckisolierung in eine, eine Drahtwicklung aufweisende Nut eines Läufers eines Elektromotors, wobei die Abdeckisolierung eine quer zu ihrer Längsachse verlaufende Abwinklung aufweist und axial in die Nut eingeschoben wird.

Verfahren der in Rede stehenden Art sowie Vorrichtungen bzw. Werkzeuge hierfür sind bekannt. So finden beispielsweise Verfahren Anwendung, bei welchen eine Vorrichtung ein Einschubwerkzeug aufweist, welches zum Einbringen der Abdeckisolierung diese vor sich herschiebend bis vor den Läufer fährt. Es wird bspw. auf die GB 1076148 verwiesen. Das Werkzeug taucht dementsprechend nicht in die Nut des Läufers ein. Diese Verfahren haben sich als nachteilig erwiesen, da ein recht hohes Risiko besteht, dass sich die Abdeckisolierung im Zuge des Einbringens in die Nut verdreht und gegebenenfalls sich aus der Nut herauswindet. Dies gilt insbesondere für Abdeckisolierungen, die eine V- oder U-Querschnittsausgestaltung aufweisen.

Weiter sind Verfahren bekannt, bei welchen ein Einschubwerkzeug in die Nut des Läufers eintaucht und hierbei die Abdeckisolierung auf der gesamten Länge führt. Durch diese Lösung ist ein Verdrehen der Abdeckisolierung vermieden. Nachteilig erweist sich diese Lösung jedoch dahingehend, dass das eine Führung ausbildende Einschubwerkzeug wieder aus dem Läufer herausgezogen werden muss. Geschieht dies in Axialrichtung, geht die Bewegung einschließlich dem Abbremsen und Beschleunigen in die Taktzeit zur Bestückung des Läufers ein. Wird das Werkzeug hingegen radial aus dem Läufer herausgeführt, ist eine zusätzliche Bewegung erforderlich, die in der Mechanik zu erhöhtem Spiel führt. Dies kann Störungen zur Folge haben. Bei hohen Arbeitsgeschwindigkeiten einer entsprechenden Nutenverschließmaschine ist es sinnvoll, die Bewegungen über eine gemeinsame Mechanik zu synchronisieren. Diesbezüglich ist es bekannt die Synchronisation über eine Kurvenscheibe zu erreichen.

Aus der JP 57148547 ist es für die Einführung von keilförmigen Magnetteilen in die Nut eines Läufers eines Elektromotors bekannt, mittels eines entsprechend als negativ zu der Keilform anfangs- und endseitig ausgebildeten Presswerkzeugen eine Verpressung der Drähte in der Nut vorzunehmen.

Im Hinblick auf den genannten Stand der Technik stellt sich der Erfindung die Aufgabe, ein zuverlässiges Verfahren zum Einbringen einer Abdeckisolierung in eine, eine Drahtwicklung aufweisende Nut eines Läufers eines Elektromotors anzugeben.

Diese Aufgabe ist beim Gegenstand des Anspruches 1 gelöst, wobei darauf abgestellt ist, dass zum Einschieben der Abdeckisolierung in die Nut zunächst radial durch die Nutöffnung ein Führungsschwert eingeführt wird und dass in den mit Hilfe des Führungsschwertes geschaffenen Schlitzraum die Abdeckisolierung dann axial eingeführt wird, wobei das Führungsschwert soweit in die Nut eintaucht, dass die Abdeckisolierung beim Einschieben durch das Führungsschwert geführt wird, und wobei nach erfolgtem Einschieben der Abdeckisolierung in die Nut das Führungsschwert wieder radial nach außen verfährt und die Nut verlässt. Zufolge des erfindungsgemäßen Verfahrens sind schnelle und gleichzeitig sichere Bewegungsabläufe gewährleistet. Das Einbringen der Abdeckisolierung in die Nut erfolgt in axialer Richtung durch Einschieben mittels eines Einschubwerkzeuges, welches die Abdeckisolierung im Zuge der Axialverlagerung vor sich her in die Nut einschiebt. Ein Verwinden der Abdeckisolierung in der Nut ist durch das radial in die Nut eingeführte Führungsschwert vermieden. Dieses Führungsschwert belässt in der Läufernut einen Schlitzraum, welcher die Ausrichtung der einzuschiebenden Abdeckisolierung vorgibt. Der geschaffene Schlitzraum ist querschnittsmäßig angepasst an den Abdeckisolierungs-Querschnitt. Das Führungsschwert taucht radial so weit in die Nut ein, dass die Abdeckisolierung geführt und ein Herauswinden verhindert wird. Das Verfahren ermöglicht, dass die Bewegung des Einschubwerkzeugs vor dem Läufer endet, gleichzeitig jedoch die Abdeckisolierung über eine große Länge geführt ist. Erreicht das Führungsschwert wieder Erwarten seine angestrebte Endlage in der Läufernut nicht, kann über eine Steuerung das Signal zur Vorschubbewegung des Einschubwerkzeuges zurückgehalten werden. Eine mögliche Fehlerursache besteht beispielsweise darin, dass der Läufer in der Spannzange der Vorrichtung verdreht ist oder die Indexierung fehlerhaft arbeitet. Das Einschubwerkzeug ist zufolge dessen nicht mehr einer unnötig hohen Belastung ausgesetzt, was bei einem Einschieben der Abdeckisolierung gegen die Wicklung oder das Läuferpaket auftreten würde. Dadurch bedingt, dass durch das erfindungsgemäße Verfahren das Führungsschwert auch zur Detektierung der korrekten Läuferausrichtung dient, wird bei Fehlausrichtung des Läufers oder auch einer Fehlwicklung, bei welcher ein Wicklungsdraht beispielsweise die Nut quert, keine Abdeckisolierung durch ein vorfahrendes Einschubwerk gestaucht. Entsprechend kann der Arbeitsvorgang abgebrochen werden und der Läufer beispielsweise automatisch aus der Maschine abgeworfen und abtransportiert werden, dies weiter bevorzugt ohne Eingriff einer Bedienperson. Das Führungsschwert ist hierbei so ausgelegt, dass es ein Aufsetzen auf dem Rotor unbeschadet übersteht. Aufgrund des neuartigen Verfahrens übernimmt das Führungsschwert noch eine weitere Prüffunktion. Das fehlerbehaftete Teil kann aus dem Prozess herausgeführt werden, ohne dass es das Risiko einer Werkzeugbeschädigung gibt oder ein Bedienereingriff erforderlich ist.

Weiterhin kann auch ein verdrehtes Läuferblech bzw. ein verbogener Pol als Fehlerbild detektiert werden. Sollte ein Fehler in der Steuerung auftreten, der die Koordination der einzelnen Bewegungen zueinander stört, so wird das baulich aufwendigste Werkzeug, nämlich das Einschubwerkzeug, nicht gefährdet, da es nicht in den Läufer eintaucht. Die Führung des Führungsschwertes ist bevorzugt so stabil dimensioniert, dass es auch ein unbeabsichtigtes Verschalten (=Verdrehen) des Läufers unbeschadet übersteht. Durch das erfindungsgemäße Verfahren ist eine hohe Prozesssicherheit beim Einbringen der Abdeckisolierungen erreicht.

Weiter kann vorgesehen, sein dass das Führungsschwert mit einer größten Breite ausgebildet ist, welche der radialen Nutöffnungsbreite entspricht und die Nutöffnungsbreite vermindert um den Durchmesser eines Wicklungsdrahtes übertrifft. Zufolge dieser breitenmäßigen Ausgestaltung des Führungsschwertes ist sichergestellt, dass eine Fehlwicklung durch das Führungsschwert detektiert wird. Ein beispielsweise einseitig über die Nutenisolation oder auch außen über den Läufer gewickelter Draht führt zu einer Nutöffnungsbreitenverminderung um mindestens einen Drahtdurchmesser. Demzufolge ist das Führungsschwert nicht mehr radial in die Läufernut einführbar. Das Führungsschwert erreicht nicht die angestrebte Endlage in der Läufernut, was über eine Endlagenabfrage erkannt werden kann. Auch hierbei kann der unbearbeitete Läufer auch unter Vermeidung einer Werkzeugbeschädigung und ohne gesonderten Eingriff eines Bedieners aus dem Prozess herausgeführt werden. Bevorzugt besteht die Abdeckisolierung aus einem Papierwerkstoff. Als besonderes vorteilhaft erweist sich das Verfahren, bei welchem das Führungsschwert über einen gesonderten Linearmotor angetrieben wird. Alternativ hierzu kann die Verlagerung des Führungsschwerts auch beispielsweise über einen Pneumatikzylinder erfolgen. Das Führungsschwert erstreckt sich bevorzugt über die gesamte Länge der Nut. Hinsichtlich einer hohen Taktfrequenz erweist es sich weiter von Vorteil, dass der Rückhub des Führungsschwertes nur so weit durchgeführt wird, dass der Läufer danach unter dem Führungsfeld verdreht werden kann. Das Führungsschwert führt entsprechend nur einen sehr kurzen Rückhub aus, so weit, bis es aus der Läufernut herausgezogen ist. Unmittelbar hiernach kann der Läufer weiter geschaltet (weiter gedreht) werden, zur Einbringung einer Abdeckisolierung in die umfangsmäßig betrachtete nächste Nut. Die hierdurch erreichte kurze Taktzeit ist nicht, wie aus dem Stand der Technik bekannt mit einem größeren Spiel und somit mit einem erhöhten Prozessrisiko verbunden.

Nachstehend ist die Erfindung anhand der beigefügten Zeichnung, welche lediglich zwei Ausführungsbeispiele darstellt, näher erläutert. Es zeigt
- Fig. 1: in einer perspektivischen Schemadarstellung eine Vorrichtung zur Einführung einer Abdeckisolierung in einer Grundstellung;
- Fig. 2: die perspektivische Herausvergrößerung des Bereiches II in Fig. 1;

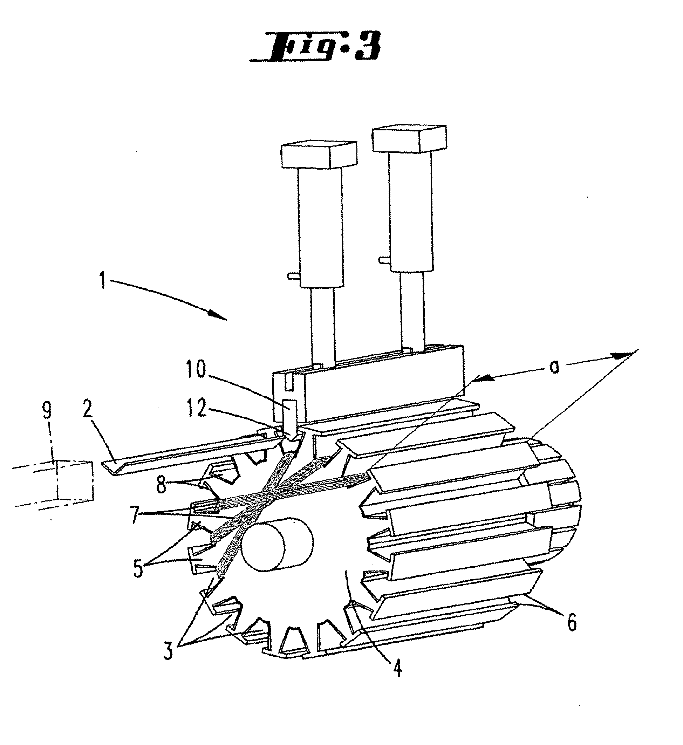

- Fig. 3: eine der Fig. 1 entsprechende Perspektivdarstellung, jedoch nach Absenken und radialem Einfahren eines Führungsschwertes in eine Läufernut;
- Fig. 4: eine Folgedarstellung zur Fig. 3, nach axialem Einführen einer Abdeckisolierung in die Läufernut;
- Fig. 5: den vergrößerten Schnitt gemäß der Linie V-V in Fig. 4;
- Fig. 6: eine der Fig.1 entsprechende Perspektivdarstellung, jedoch nach Beendigung des Einbringtaktes;
- Fig. 7: den vergrößerten Schnitt gemäß der Linie VII-VII in Fig. 6;
- Fig. 8: eine Schnittdarstellung gemäß Fig. 5, jedoch eine alternative Ausführungsform des Führungsschwertes betreffend.

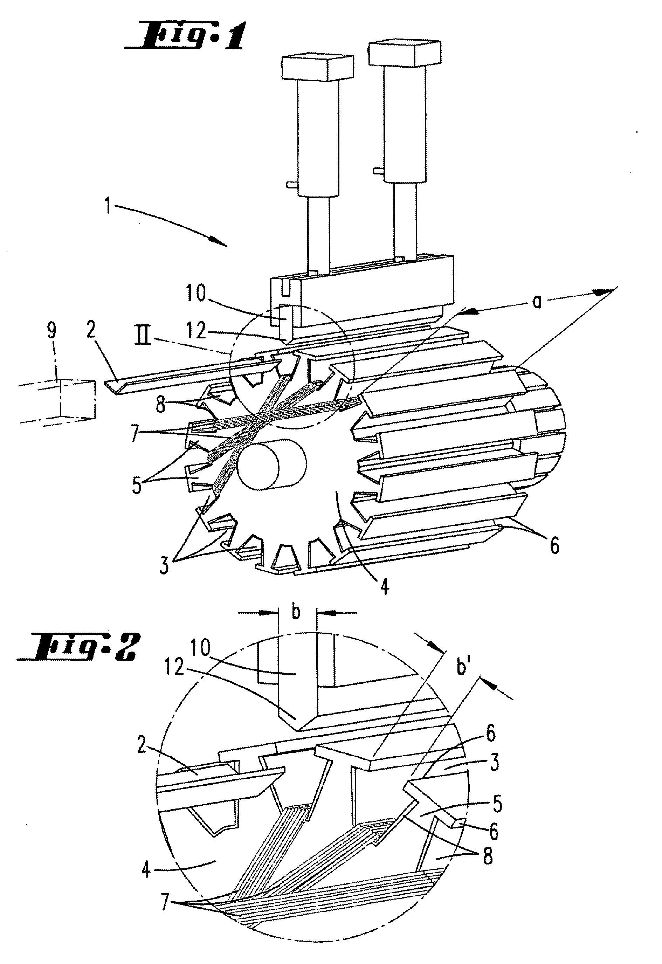

Dargestellt und beschrieben ist zunächst mit Bezug zu Fig. 1. eine Vorrichtung 1 zur Einführung einer Abdeckisolierung 2 in eine Nut 3 eines Elektromotor-Läufers 4.

Der Läufer 4 weist über den Umfang gleichmäßig verteilt mehrere, sich in Axialrichtung des Läufers 4 erstreckende Nuten 3, welche nach radial außen hin geöffnet sind. Zwischen zwei Nuten erstreckt sich ein diese trennender, im Querschnitt etwa T-förmiger Steg 5, wobei die aufeinander zuweisenden Randkanten der T-Stege zweier umfangsmäßig benachbarter Läuferstege 5 die schlitzartige Nutöffnung 6 begrenzen. Der T-Schenkel des Steges 5 ist radial ausgerichtet.

Die T-Stege zweier umfangsmäßig benachbarter Läuferstege 5 ragen freikragend, dachartig über die zugeordnete Nut 3, welche Nut 3 unterseitig ausgehend von diesen T-Stegen sich im Querschnitt in Richtung auf einen Nutgrund hin verjüngt.

Die Nuten 3 dienen zur Aufnahme von Wicklungsdrähten 7, zur Ausformung einer Läuferwicklung. Die Nuten 3 sind zur Isolation zu den Wicklungsdrähten 7 mit einer Isolationsschicht 8 ausgekleidet.

Jede Nutöffnung 6 wird mit einer Abdeckisolierung 2 aus einem Papierwerkstoff verschlossen. Wie insbesondere aus der Darstellung in Fig. 1 zu erkennen, ist die Abdeckisolierung 2 im Querschnitt V-förmig mit sich in Richtung auf die Nutöffnung 6 öffnenden Schenkeln ausgebildet.

Die zur Einführung der Abdeckisolierung 2 vorgesehene Vorrichtung 1 besteht im Wesentlichen aus zwei Werkzeugen, nämlich einem Einschubwerkzeug 9 und einem Führungsschwert 10.

Das Führungsschwert 10 wird über einen nicht näher dargestellten, gesonderten Linearmotor angetrieben und über diesen radial durch die Nutöffnung 6 in die Nut 3 eingeführt. Die Breite b der Schwertschneide 12 entspricht der radialen Öffnungsbreite b' der Nutöffnung 6. Demzufolge würde eine Fehlwicklung, bei welcher zum Beispiel ein Wicklungsdraht 7 die Nutöffnung 6 in Querrichtung durchtretend geführt ist, detektiert werden, da es dem Führungsschwert 10 aufgrund der gewählten Breiten nicht ermöglicht ist in die Nut 3 einzutauchen. Eine entsprechende Sensorik bemerkt die nicht erreichte Endlage des Führungsschwertes 10. Infolge einer solchen Detektion wird ein solcher fehlgewickelter Läufer 4 automatisch von der Vorrichtung 1 ausgesondert, dies insbesondere bevor das zweite Werkzeug, nämlich das Einschubwerkzeug 9 in Wirkung tritt.

Dieses Einschubwerkzeug 9 schiebt bei erfolgreichem Eintritt des Führungschwertes 10 in die Nut 3 die Abdeckisolierung 2 in den mit Hilfe des Führungsschwertes 10 in der Nut 3 geschaffenen Schlitzraum 11 durch die stirnseitige Nutöffnung axial ein.

Das Führungsschwert 10, insbesondere deren in der Nut 3 in Wirkstellung tretende Schwertschneide 12 erstreckt sich über die gesamte Länge a der Nut 3, demzufolge die einzuführende Abdeckisolierung 2 über die gesamte Länge in der Nut 3 eine Führung erfährt

Die Axialbewegung des Einschubwerkzeugs 9 endet vor dem Läufer 4.

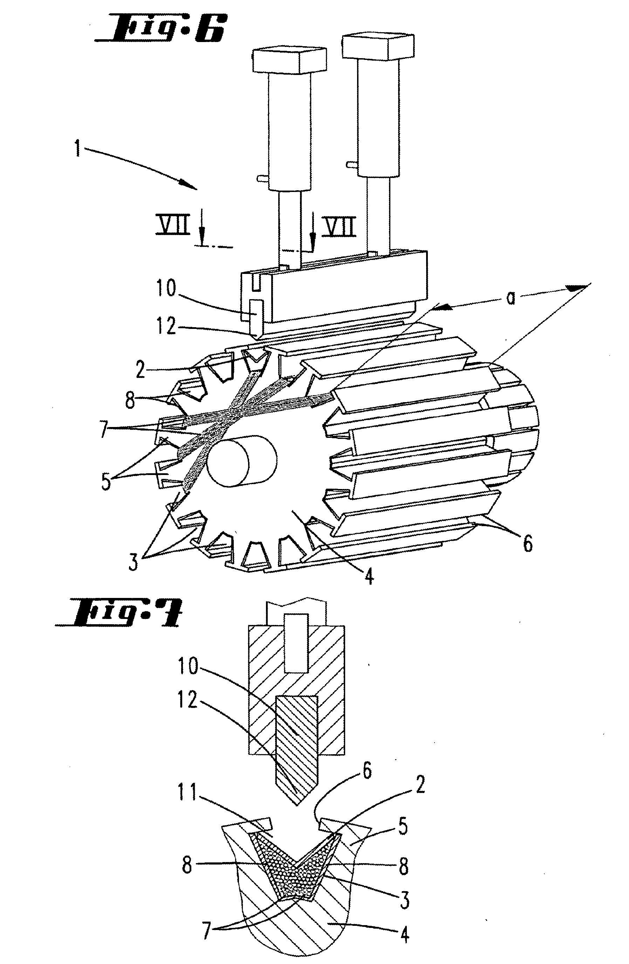

Abschließend verfährt das Führungsschwert 10 wieder nach radial außen, die Nut 3 verlassend, wobei der Rückhub des Führungsschwertes 10 nur so weit durchgeführt wird, dass der Läufer 4 danach unter dem Führungsfeld verdreht werden kann (vgL Fig. 6 und 7). Der Läufer 4 wird nach abgeschlossenem Rückhub des Führungsschwertes 10 um einen Takt weitergedreht, um die hiernach anstehende Nut 3 mit einer Abdeckisolierung 2 zu versehen.

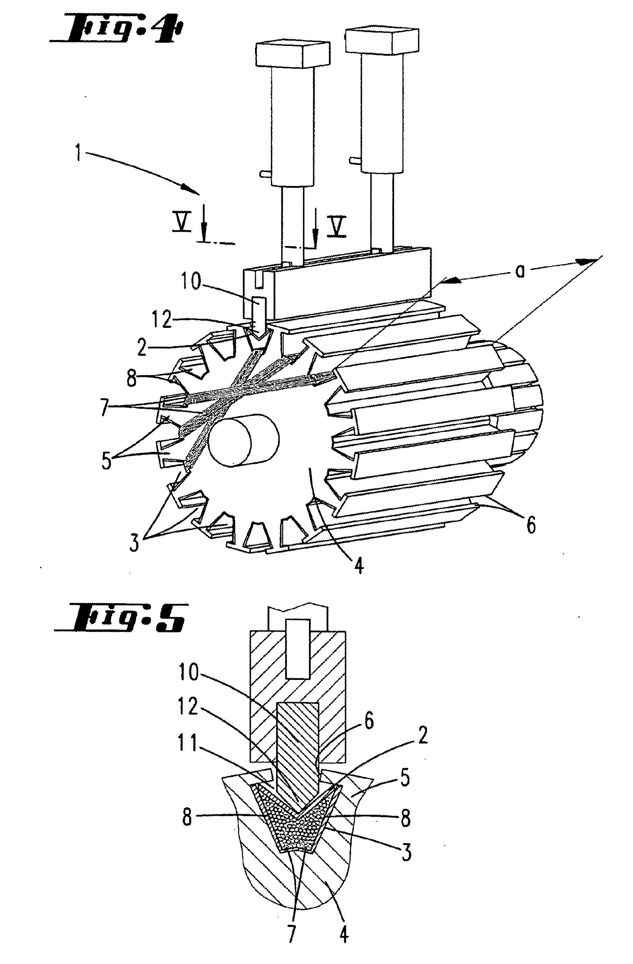

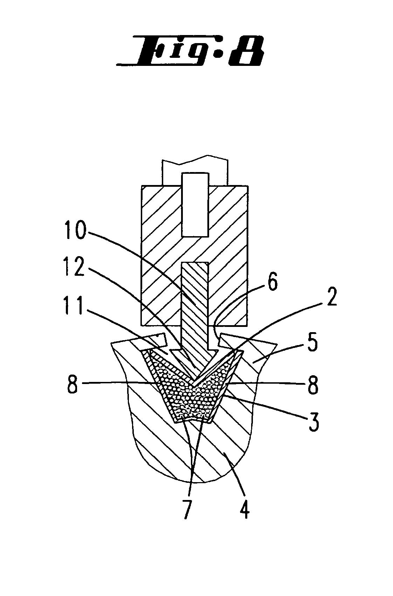

Wie insbesondere aus den Schnittdarstellungen in den Fig. 5 und 7 zu erkennen, ist die Schwertschneide 12 des Führungsschwertes 10 ausgehend von einer annähernd gleichbleibenden Materialstärke des Führungsschwertes ausgespitzt geformt. Alternativ kann wie in Fig. 8 dargestellt die Schwertschneide 12 des Führungsschwertes 10 auch im Querschnitt pfeilförmig ausgeformt sein. Die maßgebliche Breite b ist hierbei die Breite im Bereich des Pfeilrückens.

## Patentansprüche

1. Verfahren zum Einbringen einer Abdeckisolierung (2) in eine, eine Drahtwicklung aufweisende Nut (3) eines Läufers (4) eines Elektromotors, wobei die Abdeckisolierung (2) eine quer zu ihrer Längsachse verlaufende Abwinklung aufweist und axial in die Nut (3) eingeschoben wird, **dadurch gekennzeichnet, dass** zum Einschieben der Abdeckisolierung (2) in die Nut (3) zunächst radial durch die Nutöffnung (6) ein Führungsschwert (10) eingeführt wird und dass in den mit Hilfe des Führungsschwertes (10) geschaffenen Schlitzraum (11) die Abdeckisolierung (2) dann axial eingeführt wird, wobei das Führungsschwert (10) soweit in die Nut (3) eintaucht, dass die Abdeckisolierung (2) beim Einschieben durch das Führungsschwert (10) geführt wird, und wobei nach erfolgtem Einschieben der Abdeckisolierung (2) in die Nut (3) das Führungsschwert (10) wieder radial nach außen verfährt und die Nut (3) verlässt.

2. Verfahren nach Anspruch 1, **dadurch gekennzeichnet, dass** das Führungsschwert (10) mit einer größten Breite (b) ausgebildet ist, welche der radialen Nutöffnungsbreite (b') entspricht und die Nutöffnungsbreite (b') vermindert um den Durchmesser eines Wicklungsdrahtes (7) übertrifft.

3. Verfahren nach einem der vorhergehenden Ansprüche, **dadurch gekennzeichnet, dass** die Abdeckisolierung (2) aus einem Papierwerkstoff besteht.

4. Verfahren nach einem der vorhergehenden Ansprüche, **dadurch gekennzeichnet, dass** das Führungsschwert (10) über einen gesonderten Linearmotor angetrieben wird.

5. Verfahren nach einem der vorhergehenden Ansprüche, **dadurch gekennzeichnet, dass** das Führungsschwert (10) sich über die gesamte Länge (a) der Nut (3) erstreckt.

6. Verfahren nach einem der vorhergehenden Ansprüche, **dadurch gekennzeichnet, dass** der Rückhub des Führungsschwerts (10) nur so weit durchgeführt wird, dass der Läufer (4) danach unter dem Führungsfeld verdreht werden kann.

## Claims

1. A method for introducing shield insulation (2) into a slot (3) of a rotor (4) of an electric motor, the slot having a wire winding and the shield insulation (2) having an angled shape that runs transversely to its longitudinal axis and being inserted axially into the slot (3), **characterized in that** in order to insert the shield insulation (2) into the slot (3), a guide blade (10) is first of all brought-in radially through the slot opening (6), and **in that** the shield insulation (2) is then brought-in axially into the slot space (11) created by means of the guide blade (10), the guide blade (10) travelling into the slot (3) to a sufficient depth for the shield insulation (2) to be guided by the guide blade (10) during insertion of the shield insulation, and the guide blade (10) travelling radially outwards again and leaving the slot (3) after completion of insertion of the shield insulation (2) into the slot (3).

2. A method according to Claim 1, **characterized in that** the guide blade (10) is formed with a widest dimension (b) which corresponds to the radial width (b') of the slot opening and exceeds the width (b') of the slot opening when this is reduced by the diameter of a winding wire (7).

3. A method according to either of the preceding claims, **characterized in that** the shield insulation (2) consists of a paper material.

4. A method according to any of the preceding claims, **characterized in that** the guide blade (10) is driven by separate linear motor.

5. A method according to any of the preceding claims, **characterized in that** the guide blade (10) extends over the entire length (a) of the slot (3).

6. A method according to Claim 5, **characterized in that** the backstroke of the guide blade (10) is carried out only as far as is necessary for the rotor (4) to be rotated beneath the region of guidance.

## Revendications

1. Procédé pour l'insertion d'une isolation de couverture (2) dans une rainure (3) présentant un enroulement de fils du rotor (4) d'un moteur électrique, l'isolation de couverture (2) présentant un pli en U transversal par rapport à son axe longitudinal et introduit axialement dans la rainure (3), **caractérisé en ce que**, pour l'insertion de l'isolation de couverture (2) dans la rainure (3), une lame-guide (10) est d'abord introduite radialement à travers l'ouverture de la rainure (6) et que dans l'espace en fente (11) créé à l'aide de la lame-guide (10), l'isolation de couverture (2) est ensuite introduite axialement, la lame-guide (10) rentrant dans la rainure (3) de manière à ce que l'isolation de couverture (2) soit guidée lors de l'introduction par la lame-guide (10) et qu'après l'introduction de l'isolation de couverture (2) dans la rainure (3), la lame-guide (10) ressorte radialement vers l'extérieur et quitte la rainure (3).

2. Procédé selon la revendication 1, **caractérisé en ce que** la lame-guide (10) est formée avec une largeur maximale (b) qui correspond à la largeur de l'ouverture de la rainure radiale (b') et que la largeur de l'ouverture de la rainure (b") dépasse diminuée du diamètre d'un fil d'enroulement (7).

3. Procédé selon l'une des revendications qui précèdent, **caractérisé en ce que** l'isolation de couverture (2) est constituée de papier comme matière première.

4. Procédé selon l'une des revendications qui précèdent, **caractérisé en ce que** la lame-guide (10) est entraîné par un moteur linéaire séparé.

5. Procédé selon l'une des revendications qui précèdent, **caractérisé en ce que** la lame-guide (10) s'étend sur la totalité de la longueur (a) de la rainure (3).

6. Procédé selon l'une des revendications qui précèdent, **caractérisé en ce que** la course de retour de la lame-guide (10) est réalisée uniquement dans la mesure où le rotor (4) peut être tourné ensuite sous le champ de guidage.
